# EUROPÄISCHE PATENTSCHRIFT

(11) **EP 3 517 805 B1**
(45) Veröffentlichungstag und Bekanntmachung des Hinweises auf die Patenterteilung: **09.03.2022**
(21) Anmeldenummer: 18153821.6
(22) Anmeldetag: 29.01.2018
(51) Int. Cl.: F16G 9/00, F16G 13/16, H02G 11/00, E06B 9/00

(54) **KETTE FÜR EINE ABSCHIRMVORRICHTUNG**
CHAIN FOR SCREEN DEVICE
CHAÎNE POUR UN DISPOSITIF ÉCRAN

(43) Veröffentlichungstag der Anmeldung: 31.07.2019
(73) Patentinhaber: Auto-Motion Shade Inc., Markham, Ontario L3R 8H6 (CA)
(72) Erfinder: Grützner, Hans, 3122 Kehrsatz (CH)
(74) Vertreter: AMMANN PATENTANWÄLTE AG

(56) Entgegenhaltungen:
- EP-B1- 1 653 038

## Beschreibung

Die Erfindung betrifft eine Kette für eine Abschirmvorrichtung.

Bei Öffnungen wie Fenstern oder Türen von festen oder mobilen Wohn- Arbeits- oder Lagereinrichtungen werden verschiedentlich Abschirmvorrichtungen wie Lichtschutz-, Sichtschutz-, Lichtstreu- oder Insektenschutzvorrichtungen verwendet. Dabei wird die Öffnung durch ein meist textiles Flächengebilde abgedeckt beziehungsweise freigegeben, das zwischen einem feststehenden Endprofil und einem beweglichen Endprofil gefaltet oder gewickelt wird. Rechtwinklig zu den genannten Endprofilen sind Führungsprofile für das Flächengebilde und das bewegliche Endprofil angeordnet. Damit das bewegliche Endprofil während seiner Bewegung nicht verkantet, sondern zu sich selbst parallel geführt wird, sind dessen Enden durch flexible Mittel miteinander gekoppelt, die über Rollen oder Stifte umgelenkt werden. Je nach der Art der Konstruktion der Abschirmvorrichtung müssen diese flexiblen Mittel bereichsweise nicht nur Zug-, sondern auch Druckkräfte übertragen. Daher sind diese Bereiche als Kette mit gelenkig miteinander verbundenen Kettengliedern ausgebildet.

Aus dem Stand der Technik sind zwei verschiedene Arten bekannt, in denen die Kettenglieder miteinander verbunden sind, nämlich durch Schnüre, Bänder oder dergleichen oder durch eine Art Scharnier mit an einem Kettenglied angeordnete Bolzen oder Fortsätzen, die in am benachbarten Kettenglied vorhandene Ausnehmungen eingreifen. Das Dokument EP1640554 zeigt beide Arten, nämlich die Verbindung der Kettenglieder mittels Schnüren in Fig. 4B und mittels Scharnieren in Fig. 12B. Weitere Beispiele für die Verbindung der Kettenglieder durch Schnüre sind JP2014088736A und EP1959090B1. Das Dokument EP1826356A2 zeigt ein Beispiel, bei dem die Kettenglieder auf einem Band angeordnet sind. Dokumente, welche die Verbindung der Kettenglieder durch Scharniere zeigen, sind WO2013/015689A1, DE69900343T3, EP1653038B1, EP1905944B1, EP2034123B1, EP2305942B1 und EP2681393B1.

EP1653038 und ITTV20090014 A1 zeigen zudem Gattungsgemäße Ketten mit einer Kugelschnur.

Bei der Verbindung der Kettenglieder durch Schnüre oder Bänder müssen entweder die Kettenglieder auf die Schnüre oder Bänder aufgezogen und bezüglich der Schnüre oder Bänder fixiert werden, oder aber die Schnüre oder Bänder werden bei der Herstellung der Kettenglieder durch Spritzgiessen aus Kunststoff eingegossen. Bei der Verbindung der Kettenglieder durch Scharniere muss jedes einzelne Kettenglied mit einem benachbarten Kettenglied formschlüssig verbunden werden, wobei Teile der Kettenglieder elastisch verformt werden oder ein Verbindungsbolzen in zwei benachbarte Kettenglieder eingeschoben wird. Alle diese Herstellungsarten sind relativ arbeitsintensiv und machen die Ketten verhältnismässig teuer.

Ausgehend von diesem Stand der Technik liegt der Erfindung die Aufgabe zugrunde, eine Kette für eine Abschirmvorrichtung vorzuschlagen, die einfach und kostengünstig hergestellt werden kann.

Diese Aufgabe wird erfindungsgemäss durch die angegebenen Merkmale des Patentanspruchs 1 gelöst. Der im Patentanspruch 1 verwendete Begriff "Kugelschnur" ist im Bereich Roll- oder Raffstoren als Antriebsmittel gebräuchlich und bezeichnet eine flexible Schnur mit in Abständen daran befestigten Kugeln. Gelegentlich wird auch der Ausdruck "Kugelschnur-Treibriemen" verwendet. Ein Beispiel einer endlosen Kugelschnur ist im Dokument DE3814704A1 beschrieben. Im Gegensatz zu diesem Beispiel ist die Kugelschnur der vorliegenden Erfindung nicht zwingend endlos.

Durch die erfindungsgemässe Gestaltung kann die Kette in einfacher Weise zusammengestellt und demontiert werden.

Ausführungsbeispiele der Erfindung werden nachstehend unter Bezugnahme auf die angefügten Zeichnungen erläutert. Es zeigen
- Figur 1: eine perspektivische Ansicht einer Kette während der Montage;
- Figur 2: eine perspektivische Ansicht einer fertigen Kette in gebogenem Zustand;
- Figur 3: eine perspektivische Ansicht eines einzelnen Kettenglieds;
- Figur 4: einen Aufriss des Kettenglieds gemäss Figur 3 und
- Figur 5: eine entlang der Linie V - V in Figur 4 geschnittene Ansicht des gleichen Kettenglieds.

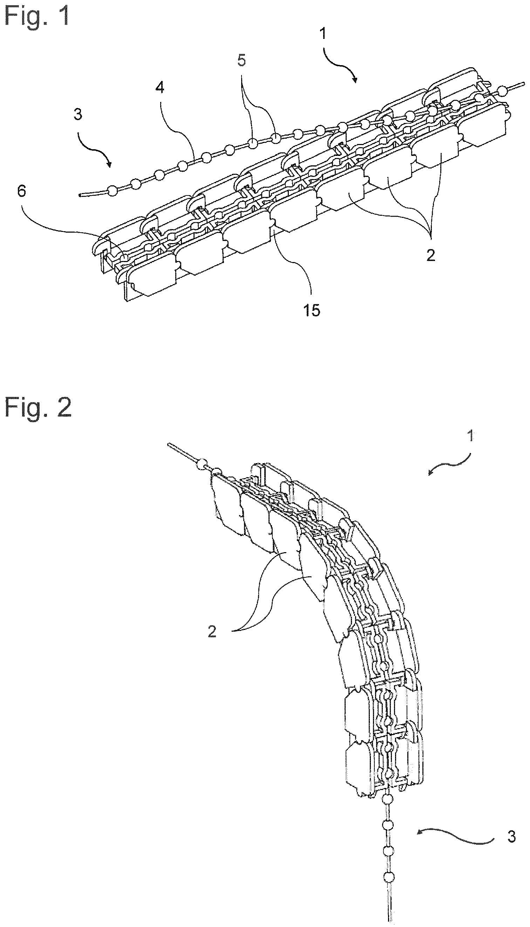

Die in Figur 1 in einer perspektivischen Ansicht dargestellte Kette 1 besteht aus in gegenseitigem Kontakt aufgereihten, starren Kettengliedern 2, die durch eine Kugelschnur 3 zusammengehalten werden. Letztere besteht aus einer Schnur 4, die als Mono- oder Multifilament ausgebildet sein kann und auf der in regelmässigen Abständen Kugeln 5 fixiert sind. Figur 1 zeigt eine Situation, in der die Kette 1 zusammengebaut wird. Dabei werden die Kettenglieder wie dargestellt aufgereiht, beispielsweise auf einer nicht dargestellten Hilfsvorrichtung in Form einer Führungsschiene. Zunächst wird eine Kugel 5 manuell in eine Öffnung 6 des in der Figur ganz rechts angeordneten Kettenglieds 2 gedrückt und die Kugelschnur 3 wie dargestellt über den anschliessenden Kettengliedern 2 in Position gebracht. Anschliessend werden die Kugeln 5 nacheinander in der Figur von rechts nach links in die betreffenden Öffnungen 6 gepresst, beispielsweise mit Hilfe einer nicht dargestellten Rolle. Durch die Anordnung von zwei oder mehr Öffnungen 6 pro Kettenglied 2 wird nicht nur die Verbindung zwischen der Kugelschnur 3 und den Kettengliedern 2 aufgrund der Haftreibung der Kugeln 5 in den Öffnungen 6 verbessert, sondern es ist auch möglich, eine Kette mit einem zusätzlichen Kugelschnur-Abschnitt zu verlängern, indem ein und dasselbe Kettenglied 2 je eine Kugel 5 zweier getrennter Kugelschnur-Abschnitte aufnimmt.

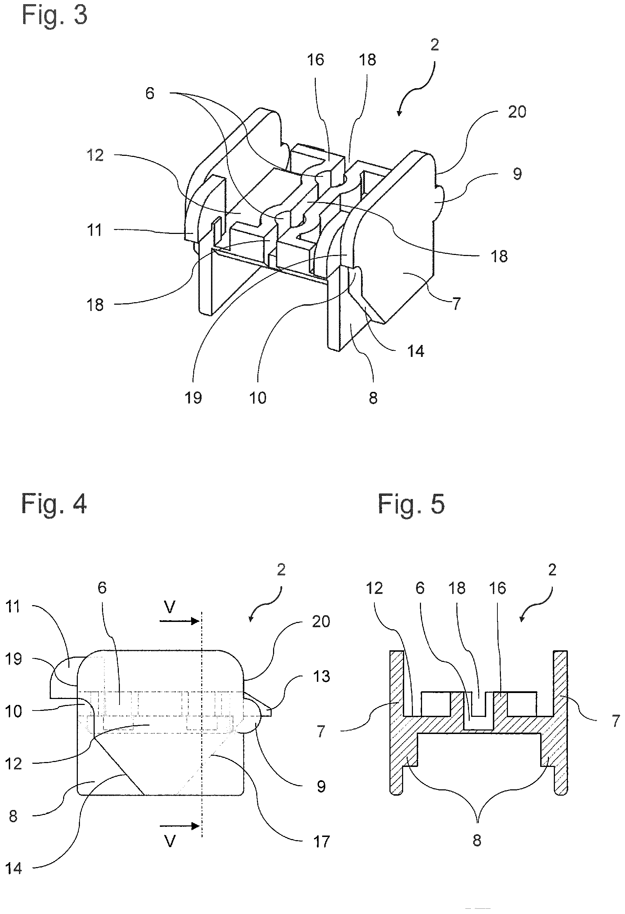

Ein wichtiger Aspekt der beispielhaft beschriebenen und dargestellten Kette wird in Figur 2 veranschaulicht. Die Kette 1 ist nämlich so aufgebaut, dass sie beispielsweise im Rahmen eines Fensters umgelenkt werden, also in einer Richtung wie in Figur 2 dargestellt umgebogen werden kann. Dagegen ist die Kette 1 in der Gegenrichtung, also in Richtung zur Kugelschnur 3, relativ steif, damit sie ein Flächengebilde, beispielsweise ein Insektenschutznetz, in einer Öffnung wie einem Fenster führt und stützt, ohne bei einer Druckbelastung in Richtung zur Fensteröffnung einzuknicken. Wie das erreicht wird, geht aus der nachfolgenden Beschreibung der Figuren 3 bis 5 hervor.

Figur 3 zeigt ein einzelnes Kettenglied 2 in einer perspektivischen, gegenüber Figur 1 vergrösserten Ansicht und die Figuren 4 und 5 zeigen dasselbe Kettenglied 2 in einem Aufriss beziehungsweise einem Schnitt entlang der Linie V - V in Figur 4. Das Kettenglied 2 ist beispielsweise aus einem Kunststoff im Spritzgiessverfahren hergestellt und besteht im Wesentlichen aus zwei parallelen Seitenwänden 7, die durch einen Steg 12 miteinander verbunden sind, so dass sich die in Figur 5 sichtbare H-Form ergibt. Auf dem Steg 12 ist eine Erhöhung 16 vorhanden, in der einerseits zwei Öffnungen 6 und andererseits Schlitze 18 geformt sind. Die beiden Öffnungen 6 dienen zur Aufnahme jeweils einer Kugel 5 der Kugelschnur 3, wobei der Durchmesser der Öffnung 6 so gewählt ist, dass die Kugel 5 mit einem Presssitz darin gehalten wird. Alternativ oder zusätzlich könnte die Öffnung 6 hinterschnitten ausgebildet sein, so dass die eingepresste Kugel 5 darin einrastet. Die Schlitze 18 nehmen im montierten Zustand der Kette 1 die Schnur 4 der Kugelschnur 5 auf.

Alternativ oder zusätzlich zu der in den Figuren gezeigten Anordnung der Öffnungen 6 könnte im Kettenglied 2 in den beiden Randbereichen, an die ein weiteres Kettenglied anschliesst, Öffnungen derart angeordnet werden, dass jeweils eine Kugel zwischen zwei benachbarte Kettenglieder zu liegen kommt.

Für die nachfolgende Beschreibung wird in den Figuren 1 und 3 dargestellte Lage des Kettenglieds 2 als Referenz für die Begriffe vorne, hinten, oben, unten, links und rechts genommen. Im Einsatz der Kette 1 in einer nicht dargestellten Abschirmvorrichtung kann sich diese Lage selbstverständlich ändern. Vorne am Kettenglied 2 hat jede der links und rechts angeordneten Seitenwände 7 einen halbkreisförmigen Vorsprung 9. Innen an jeder Seitenwand 7 trägt das Kettenglied 2 einen Ansatz 8, der hinten über die Seitenwand 7 hinausragt und oben eine Auskragung 11 aufweist. Ausserdem hat jede Seitenwand 7 im hinteren Bereich eine konkave Rundung 10, in die der halbkreisförmige Vorsprung 9 eines hinten benachbarten Kettenglieds 2 passt und mit dieser zusammen ein Schwenkgelenk bildet. Dabei greift der hinten vorstehende Ansatz 8 zwischen die Seitenwände 7 des hinten benachbarten Kettenglieds 2 und verhindert eine gegenseitige seitliche Verschiebung der Kettenglieder 2. Eine gegenseitige vertikale Verschiebung der Kettenglieder 2 wird einerseits durch den in der Rundung 10 aufgenommenen Vorsprung 9 des benachbarten Kettenglieds 2 und andererseits durch zwei mit der Erhöhung 16 verbundene Nasen 13 verhindert, die auf dem Steg 12 des benachbarten Kettenglieds 2 aufliegen.

Ausgehend von der in Figur 1 dargestellten gestreckten Position lässt sich die Kette 1 nicht nach oben biegen beziehungsweise um- oder auslenken, weil bei aneinandergereihten und durch die Kugelschnur 3 verbundenen Kettengliedern 2 die hintere Endkante 19 eines Kettenglieds 2 an der vorderen Endkante 20 des benachbarten Kettenglieds 2 anliegt. Hingegen kann die Kette 1 wie in Figur 2 dargestellt nach unten gebogen beziehungsweise umgelenkt werden. Dazu ist jeweils zwischen zwei Kettengliedern 2 in deren unterem Bereich eine konische Lücke 15 vorhanden, die durch eine Abschrägung 14 der Seitenwand 7 gebildet ist. Ebenso weist der Ansatz 8 auf der Innenseite der Seitenwand 7 eine Abschrägung 17 auf, die Platz für den Ansatz 8 des benachbarten Kettenglieds 2 bietet.

Wenn die Kette 1 in einer Abschirmvorrichtung montiert ist, die eine Öffnung wie ein Fenster durch ein Flächengebilde, beispielsweise ein Insektenschutznetz abdeckt beziehungsweise freigibt, werden die Kettenglieder mit ihrer in den Figuren oberen Seite in einem Führungsprofil geführt. Das Flächengebilde ragt dabei in den in Figur 5 unteren Bereich zwischen die Seitenwände 7 der Kettenglieder 2 und wird dort seitlich gehalten und geführt.

### Bezugszeichenliste

- 1: Kette
- 2: Kettenglied
- 3: Kugelschnur
- 4: Schnur
- 5: Kugeln
- 6: Öffnung
- 7: Seitenwand
- 8: Ansatz
- 9: Vorsprung
- 10: Rundung
- 11: Auskragung
- 12: Steg
- 13: Nase
- 14: Abschrägung
- 15: Lücke
- 16: Erhöhung
- 17: Abschrägung
- 18: Schlitz
- 19: Endkante
- 20: Endkante

## Patentansprüche

1. Kette (1) für eine Abschirmvorrichtung, bestehend aus mehreren starren Kettengliedern (2) und einem die Kettenglieder (2) verbindenden flexiblen Zugmittel (3), wobei das flexible Zugmittel eine Kugelschnur (2) ist, die aus einer Schnur (4) und in Abständen darauf angeordneten Kugeln (5) besteht und wobei die Kugeln (5) in Offnungen (6) der Kettenglieder (2) aufgenommen sind, wobei im Umfang jeder Öffnung (6) zwei gegenüberliegende, einseitig offene Schlitze (18) angeordnet sind, in denen die Schnur (4) aufgenommen ist, wobei das Kettenglied (2) zwei durch einen Steg (12) verbundene Seitenwände (7) aufweist und im Querschnitt eine H-Form bildet, und wobei die Öffnungen (6) im Steg (12) angeordnet sind.

2. Kette (1) nach Anspruch 1, **dadurch gekennzeichnet, dass** das Kettenglied (2) mindestens zwei Öffnungen (5) aufweist.

3. Kette (1) nach einem der vorangehenden Ansprüche, **dadurch gekennzeichnet, dass** das Kettenglied (2) auf einer Seite einen Vorsprung (9) und auf der gegenüberliegenden Seite eine konkave Rundung (10) aufweist, in die der Vorsprung (9) eines benachbarten Kettenglieds (2) eingreift.

4. Kette (1) nach Anspruch 1, **dadurch gekennzeichnet, dass** innen an den Seitenwänden (7) des Kettenglieds (2) Ansätze (8) angeordnet sind, die zwischen die Seitenwände (7) eines benachbarten Kettenglieds (2) greifen.

5. Kette (1) nach Anspruch 1 oder 4, **dadurch gekennzeichnet, dass** mindestens eine Nase (13) mit dem Steg (12) verbunden ist, die bei gestreckter Kette (1) auf dem Steg (12) eines benachbarten Kettenglieds (2) aufliegt.

## Claims

1. Chain (1) for a screen device, consisting of a plurality of rigid chain links (2) and of a flexible traction means (3) that connects the chain links (2), the flexible traction means being a ball string (2) that consists of a string (4) and of balls (5) arranged thereon at intervals, and the balls (5) being received in openings (6) of the chain links (2), wherein two opposite, unilaterally open slots (18) are provided in the circumference of each opening (6), in which the string (4) is received, the chain link (2) having two side walls (7) that are connected by a web (12) and form an H shape in cross-section, and the openings (6) being arranged in the web (12).

2. Chain (1) according to claim 1, **characterised in that** the chain link (2) has at least two openings (5).

3. Chain (1) according to one of the preceding claims, **characterised in that** the chain link (2) has a protrusion (9) on one side and a concave rounded portion (10) on the opposite side in which the protrusion (9) of an adjacent chain link (2) engages.

4. Chain (1) according to claim 1, **characterised in that** projections (8) are provided on the inside of the side walls (7) of the chain link (2) which engage between the side walls (7) of an adjacent chain link (2).

5. Chain (1) according to claim 1 or 4, **characterised in that** at least one nose (13) is connected to the web (12), which comes to rest on the web (12) of an adjacent chain link (2) when the chain (1) is unbent.

## Revendications

1. Chaîne (1) pour un dispositif écran, constituée de plusieurs maillons de chaîne rigides (2) et d'un moyen de traction (3) flexible qui relie les maillons de chaîne (2), le moyen de traction flexible étant une chaîne à billes (2) constituée d'un fil (4) et de billes (5) agencées sur celui-ci à des intervalles, et les billes (5) étant reçues dans des ouvertures (6) des maillons de chaîne (2), où deux fentes (18) opposées, ouvertes d'un côté sont agencées dans la circonférence de chaque ouverture (6), dans lesquelles le fil (4) est reçu, le maillon de chaîne (2) présentant deux parois latérales (7) reliées par une âme (12) et formant en coupe transversale une forme de H, et les ouvertures (6) étant agencées dans l'âme (12).

2. Chaîne (1) selon la revendication 1, **caractérisée en ce que** le maillon de chaîne (2) présente au moins deux ouvertures (5).

3. Chaîne (1) selon l'une des revendications précédentes, **caractérisée en ce que** le maillon de chaîne (2) présente d'un côté une saillie (9) et du côté opposé une partie arrondie (10) concave dans laquelle s'engage la saillie (9) d'un maillon de chaîne (2) adjacent.

4. Chaîne (1) selon la revendication 1, **caractérisée en ce qu'**à l'intérieur des parois latérales (7) du maillon de chaîne (2) sont agencées des projections (8) qui s'engagent entre les parois latérales (7) d'un maillon de chaîne (2) adjacent.

5. Chaîne (1) selon la revendication 1 ou 4, **caractérisée en ce qu'**au moins un ergot (13) est relié à l'âme (12) qui repose sur l'âme (12) d'un maillon de chaîne (2) adjacent lorsque la chaîne est étendue.
